# EUROPÄISCHE PATENTSCHRIFT

(11) **EP 3 582 910 B1**
(45) Veröffentlichungstag und Bekanntmachung des Hinweises auf die Patenterteilung: **03.03.2021**
(21) Anmeldenummer: 17797272.6
(22) Anmeldetag: 26.10.2017
(51) Int. Cl.: B21H 1/18, B21H 7/00

(54) **VERFAHREN ZUM QUERKEILWALZEN VON TELLERVENTILEN**
METHOD FOR CROSS-WEDGE ROLLING POPPET VALVES
PROCÉDÉ DE LAMINAGE DE TYPE À CLAVETTE TRANSVERSALE DE SOUPAPES À DISQUE

(30) Priorität: 15.02.2017 DE 102017103042
(43) Veröffentlichungstag der Anmeldung: 25.12.2019
(73) Patentinhaber: Federal-Mogul Valvetrain GmbH, 30890 Barsinghausen (DE)
(72) Erfinder: MATTHIAS, Thorsten, 30826 Garbsen (DE); WOLKING, Antonius, 30890 Barsinghausen (DE); BAYARD, Guido, 44369 Dortmund (DE)
(74) Vertreter: Becker & Kurig Partnerschaft Patentanwälte PartmbB
(86) Internationale Anmeldenummer: PCT/EP2017/077403
(87) Internationale Veröffentlichungsnummer: WO 2018/149518

(56) Entgegenhaltungen:
- WO-A1-2016/179780
- DATABASE WPI Week 201101 Thomson Scientific, London, GB; AN 2010-P14051 XP002777630, -& CN 101 856 706 A (UNIV BEIJING SCI & TECHNOLOGY) 13. Oktober 2010 (2010-10-13)
- DATABASE WPI Thomson Scientific, London, GB; AN 2015-665100 XP002777631, -& CN 104 924 028 A (UNIV BEIJING SCIENCE & TECH; HUAIJI DENGYUN AUTO PARTS HOLDING CO LTD) 23. September 2015 (2015-09-23)
- DATABASE WPI Week 201546 Thomson Scientific, London, GB; AN 2015-37444N XP002777632, -& CN 104 525 800 A (UNIV BEIJING SCI & TECHNOLOGY) 22. April 2015 (2015-04-22)
- DATABASE WPI Week 201058 Thomson Scientific, London, GB; AN 2010-K65247 XP002777633, -& CN 101 786 132 A (UNIV BEIJING SCI & TECHNOLOGY) 28. Juli 2010 (2010-07-28)

## Beschreibung

Die vorliegende Erfindung betrifft ein Verfahren zum Querkeilwalzen von Tellerventilen. Insbesondere betrifft die vorliegende Erfindung ein Verfahren zum Querkeilwalzen von innengekühlten Tellerventilen.

Bisher sind verschiedene Verfahren bekannt wie innengekühlte Tellerventile hergestellt werden können. Beispielsweise ist in der Thomson Scientific, London, GB; AN 2010-P14051 XP00277630, & CN101 856 706 A (Univ Beijing CSI & Technology) ein gattungsgemäßes Verfahren zum Querkeilwalzen von Tellerventilen beschrieben.

Es ist bisher sehr aufwändig Tellerventile und insbesondere innengekühlte Tellerventile herzustellen, da einerseits eine hohe Genauigkeit notwendig ist und andererseits ein Material verwendet werden muss, dass auch bei hohen Temperaturen eine ausreichende Festigkeit aufweist um den Belastungen durch die Verbrennung in einem Brennraum eines Verbrennungsmotors wiederstehen zu können. Die übliche spanende Herstellung resultiert in viel Material das wieder eingeschmolzen werden muss. Es sind verschiedene Verfahren bekannt bei denen Ventile mittels Pressen oder Gesenkschmieden hergestellt werden. Bei den ersten innengekühlten Ventilen wurde der Ventilschaft in Längsrichtung ausgebohrt. Es ist daher wünschenswert ein Verfahren zur Verfügung zu haben, um den Verbrauch bzw. die Verschwendung von Material beim spanenden Bearbeiten zu minimieren.

Gemäß einem Aspekt der vorliegenden Erfindung wird ein Verfahren zum Herstellen von Tellerventilen bereitgestellt, das die Merkmale des Anspruchs 1 aufweist. Bevorzugte Ausführungsformen sind in den abhängigen Ansprüchen beschrieben. Das erfindungsgemäße Verfahren umfasst dabei ein Querkeilwalzen eines Vorformlings zu einem Ventilrohling. Der Vorformling umfasst dabei mindestens einem Tellerabschnitt und einem Schaftabschnitt. Ein Durchmesser des Schaftabschnitts wird beim Querkeilwalzen im Wesentlichen auf einen

Schaftdurchmesser verringert, wobei während des Querkeilwalzens ebenfalls eine Länge des Schaftabschnitts durch Auswalzen im Wesentlichen auf eine Schaftlänge erhöht wird.

Da das Querkeilwalzen den Vorformling beim Walzvorgang auf Torsion belastet kann es notwendig sein den Schaftdurchmesser nicht auf ein Endmaß zu walzen sondern einen gering größeren Durchmesser zu walzen, der später durch ein Endbearbeiten auf einen Enddurchmesser verringert wird. Der größere

Durchmesser beträgt dabei 101% bis 105% des Enddurchmessers des fertigen Ventils. Gleiches gilt für die Schaftlänge, wobei während des Querkeilwalzens ein größerer Durchmesser in Form eine Endverdickung an einem Ende an dem Schaftes vorgesehen wird, der beim Querkeilwalzen eine Kraft in Axialrichtung ausübt, die eine Vergrößerung der Schaftlänge beim Walzen erleichtert. Eine Endverdickung kann ebenfalls eine Möglichkeit bieten eine Längsöffnung in dem Ventilschaft, die sich durch die Endverdickung erstreckt zu verschließen nachdem beispielsweise Natrium als Kühlmittel in einen solchen Hohlraum eingefüllt wurde. Das Verschließen der Endöffnung kann hier einfach durch Walzen der Endverdickung auf den Schaftdurchmesser erfolgen. Es ist dabei ebenfalls möglich Strukturen für den Eingriff von Kegelstücken an dem Schaftende in dieses einzuwalzen.

Bei dem erfindungsgemäßen Verfahren ist der Schaftabschnitt des Vorformlings hohl ausgeführt. Der hohle Schaftabschnitt bildet dabei einen Hohlraum in dem Schaftabschnitt der auch beim Querkeilwalzen erhalten bleiben soll. Diese Ausführung betrifft ein Herstellungsverfahren für innengekühlte Ventile. Beim Querkeilwalzen des Vorformlings der mindestens einen Tellerabschnitt und einen Schaftabschnitt aufweist, zu einem Ventilrohling, wird ein Kern oder ein Stützstift eingesetzt, der verhindern soll, dass der Hohlraum beim Walzen geschlossen wird.

Eine weitere Ausführungsform des Verfahrens zum Herstellen von Tellerventilen, nutzt einen Vorformling, der zwei Tellerabschnitte und zwei Schaftabschnitte umfasst, wobei die zwei Tellerabschnitte miteinander verbunden sind, und wobei die Tellerabschnitte nach einem Querkeilwalzen bevorzugt nach einer spanenden Bearbeitung einer Walzfläche getrennt werden. Eine zusätzliche Ausführungsform des Verfahrens zum Herstellen von Tellerventilen, nutzt zwei Vorformlinge, die an den Tellerabschnitten aneinander liegen, wobei sich die beiden Schaftabschnitte nach außen erstrecken. Die beiden Vorformlinge sind dabei koaxial angeordnet. Die Tellerabschnitte stützen sich beim Querkeilwalzen gegeneinander ab, wobei die beiden Tellerflächen im Wesentlichen eben und glatt bleiben. Bei dieser Ausführung müssen die beiden Vorformlinge nicht an den Tellerflächen getrennt werden, da sie bereits getrennt vorliegen.

Das erfindungsgemäße Verfahren zum Herstellen von Tellerventilen umfasst das Querkeilwalzen von Vorformlingen deren Schaftabschnitte einen in Axialrichtung zu einem zum Schaftende hin offenen Hohlraum umfassen. Während des Querkeilwalzens ist jeweils mindestens ein Kern in jedem der Hohlräume angeordnet, der während des Querkeilwalzens verhindert, dass der Hohlraum zusammengedrückt wird und dafür sorgt, dass sich die Länge des Schaftabschnitts beim Querkeilwalzen erhöht.

Bei einer weiteren Ausführung des Verfahrens umfasst dieses weiter umfassend Einwalzen von Eingriffsstrukturen an einem Schaftende des Schaftabschnitts. Die Eingriffsstrukturen können ebenfalls im Querkeilwalzverfahren eingewalzt werden, und dienen dazu das fertige Ventil mit Keilstücken in Eingriff bringen zu können. Es ist möglich bei diesem Arbeitsgang gleich den Hohlraum zu verschließen und eine eventuell vorhandene Endverdickung auf einen Schaftdurchmesser oder auch unter einen Schaftdurchmesser zu walzen. Wenn der Hohlraum vorher mit Natrium als Kühlmittel gefüllt wurde, ist es nicht mehr notwendig den Hohlraum später durch einen gesonderten Arbeitsschritt zu verschließen.

Bei einer weiteren Ausführungsform des Verfahrens wird der Vorformling beim Querkeilwalzen parallel bzw. tangential zu einer Walzbewegung von Querkeilwalzelementen abgestützt. Dadurch kann sichergestellt werden, dass eine Längsachse des Vorformlings parallel zu Querkeilwalzenachsen bzw. senkrecht zu einer Bewegungsrichtung von Querkeilwalzplatten bleibt. Durch das Abstützen kann sichergestellt werden, dass der Vorformling bis zum Erreichen der Form des Ventilrohlings eine rotationssymmetrische Form behält. Durch ein Abstützen mit Abstützelementen kann sichergestellt werden, dass die Ebene des Ventiltellers senkrecht zu einer Schaftachse verläuft.

Eine Ausführungsform des Verfahrens umfasst mindestens zwei aufeinanderfolgende Querkeilwalzschritte, wobei bevorzugt zwei oder mehr verschiedene Kerne verwendet werden. Diese Ausführungsform gestattet es durch mehrere kleinere Umformungen die Belastung der Walzen bzw. Walzelemente zu verringern. Durch mehrere kleinere Umformschritte durch Querkeilwalzen kann insbesondere der Verschleiß der Querkeilwalzen, bzw. der Querkeilwalzelemente verringert werden. In dieser Ausführung kann insbesondere die Standzeit Querkeilwalzen, bzw. der Querkeilwalzelemente deutlich erhöht werden.

Bei einer weiteren Ausführungsform des vorliegenden Verfahrens umfasst dieses weiter ein spanendes Endbearbeiten des Tellerventilrohlings oder der Tellerventilrohlinge zu einem Tellerventil oder zu Tellerventilen. Dieser Schritt kann notwendig werden, sofern sich durch Walzen nicht die Oberflächenbeschaffenheiten oder Toleranzen erreichen lassen wie sie durch spanendes Bearbeiten möglich sind.

Eine weitere Ausführungsform des Verfahrens umfasst weiter ein Beschichten der Tellerventilrohlinge oder Tellerventile mit einer Oberflächenbeschichtung. Oberflächenbeschichtungen können diamantartiger Kohlenstoff, Keramikbeschichtungen, Galvanische Beschichtungen und dergleichen umfassen.

Bei einem Verfahren gemäß einer weiteren Ausführungsform wird weiter der Hohlraum in dem Ventilschaft mit Natrium gefüllt und dann verschlossen. Es ist ebenfalls möglich ein Schutzgas einzubringen, um eine Reaktion des Natriums mit Luftsauerstoff zu vermeiden. Es wird bevorzugt, das Natrium in den zum Schaftende offenen Hohlraum einzubringen, bevor eine Schaftendverdickung gewalzt wird, und so der Hohlraum verschlossen wird. Es ist weiter bevorzugt, wenn das Natrium in einen Ventilrohling eingebracht wird, der noch eine Schaftendverdickung aufweist. Bei einer vorhandenen Schaftendverdickung kann das der Durchmesser des verdickten Schaftendes durch einen weiteren Querkeilwalzschritt auf den Durchmesser des Schaftes verringert werden. In diesem Querkeilwalzschritt können zudem noch Rillen in das Schaftende eingewalzt werden, in die Keilstücke zur Befestigung der Ventilfedern eingreifen können. Dieses ermöglicht eine nahezu spanfreie Herstellung des Tellerventils, wobei lediglich eine spanende Endbearbeitung notwendig sein kann, sofern sich nicht nur durch die Walzvorgänge die erforderlichen Toleranzen und Oberflächengüten erreichen lassen. Da sich das Tellerventil durch die Technologie des Querkeilwalzens schnell und sehr nahe an die endgültige Form umformen lässt fallen bei einer spanenden Endbearbeitung nur sehr wenige Späne an, wodurch Material eingespart werden kann.

Bei dem erfindungsgemäßen Verfahren erstreckt sich der Hohlraum vor dem Querkeilwalzen bis in den Tellerabschnitt, wobei der Hohlraum vor dem Querkeilwalzen einen größeren Durchmesser aufweist als der spätere Schaftdurchmesser nach dem Querkeilwalzen. Diese Konfiguration gestattet es, dass sich nach dem Querkeilwalzen in dem Ventilkopf des Tellerventils ein Hohlraum befindet, dessen maximaler Durchmesser größer ist als der spätere Schaftdurchmesser. Somit gestattet es die vorliegende Erfindung nicht nur Ventile mit hohlem Schaft, sondern auch mit einem im wesentlichen hohlen Ventilkopf herzustellen dessen Wanddicke auch im Kopfbereich fast konstant ist, und so eine besonders große Menge Kühlmittel in dem Ventilkopf unterbringen kann. Derartige Ventile sind auch als Hohlkopfventile bekannt. Das bisherige Optimum an Gewichtsreduzierung und an Wärmeableitung von der Ventiltellerfläche wird durch ein Hohlkopfventil erreicht. Somit gestattet es die vorliegende Erfindung ebenfalls die modernsten und vom Gewichtsverhältnis besten Ventile herzustellen.

Im Folgenden wird die vorliegende Erfindung anhand von Figuren veranschaulicht, die insbesondere das Herstellungsverfahren anhand von Vorformlingen und Ventilrohlingen verdeutlichen.
Figuren 1 und 2 stellen das Prinzipielle Verfahren des Querkeilwalzens gemäß des Standes der Technik dar.
Figur 3 zeigt einen Vorformling, aus dem ein Ventilrohling durch herkömmlichens Querkeilwalzen gewalzt werden kann.
Figur 4 stellt einen Ventilrohling dar, wie er aus dem Vorformling von Figur 3 gewalzt werden kann.
Figur 5A bis 5C zeigen eine besondere Art eines Doppelventilvorformlings bzw. zweier zusammengelegter Ventilvorformlinge die gleichzeitig in einem Querkeilwalzvorgang zu einem Doppelventilrohling bzw. zwei Ventilrohlingen gewalzt werden können, wobei die Ventilrohlinge als Hohlkopfventil ausgeführt sind.
Figur 6 zeigt ein Querkeilwalzelement, mit dem der Doppelventilvorformling gemäß Figur 5 zu zwei Ventilrohlingen umgeformt werden kann.

Im Folgenden werden sowohl in der Beschreibung als auch in den Figuren gleiche oder ähnliche Bezugszeichen verwendet um auf gleiche oder ähnliche Bezugszeichen Bezug zu nehmen.

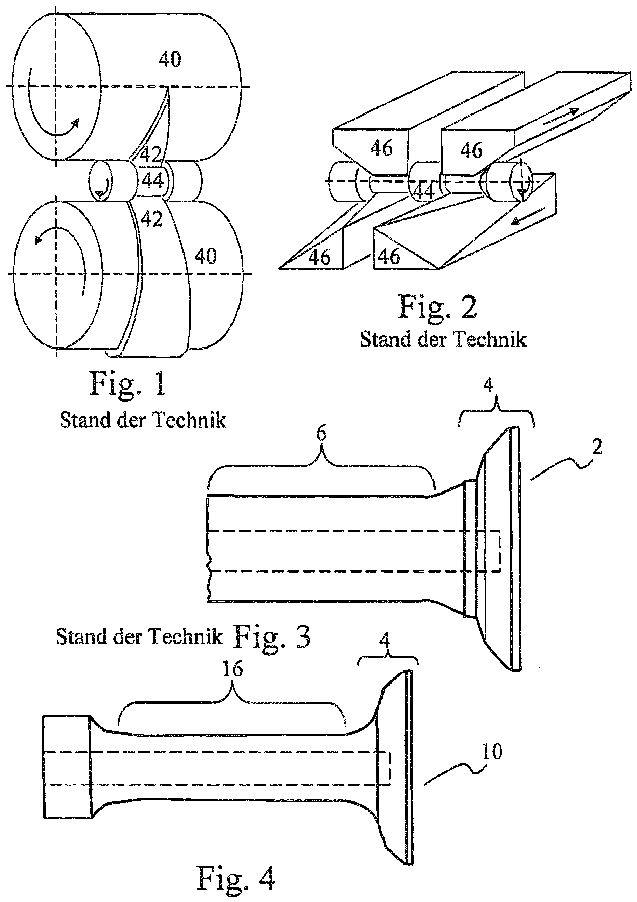

Figur 1 zeigt zwei herkömmliche Querkeilwalzen 40, die an ihrer Walzfläche mit Querkeilen 42 versehen ist die den Walzspalt zwischen den Walzen deutlich verringern. In ein, sich zwischen den Querkeilwalzen drehendes Werkstück 44 wird durch die Keile ein Bereich mit einem verringerten Durchmesser eingewalzt. Dieses Umformverfahren ist im Vergleich zu einem spanenden Verfahren wie beispielsweise einem Abdrehen auf einer Drehbank sehr viel materialsparender, da keine Späne anfallen. Abstützelemente und Führungen sowie der Walzenstuhl mit den Anrieben der Walzen sind der Übersichtlichkeit halber nicht dargestellt.

Figur 2 stellt ein herkömmliches Verfahren des Querkeilwalzens mit ebenen Querkeilwalzelementen 46 dar, wobei die Querkeilwalzelemente 46 jeweils gegeneinander eine gerade Bewegung ausführen, und eine Keilform der Querkeilwalzelemente 46 in dem

Werkstück 44 den verringerten Durchmesser einwalzen.

Figur 3 zeigt einen Vorformling oder Ventilvorformling 2, aus dem ein Ventilrohling durch Querkeilwalzen gewalzt werden kann. Der Vorformling 2 umfasst einen Tellerabschnitt 4 sowie einen Schaftabschnitt 6. In dem Schaftabschnitt 6 ist eine Hohlraum 8 durch eine gestrichelte Linie angedeutet. Das vorliegende Verfahren ist insbesondere auf innengekühlte Ventile gerichtet, wobei der Vorformling 2 bereits mit dem Hohlraum 8 versehen ist. Es ist jedoch ebenfalls möglich den Vorformling ohne einen Hohlraum durch Querkeilwalzen in einen nicht-innengekühlten Ventilrohling umzuformen,

Figur 4 stellt einen Ventilrohling 10 dar, wie er aus dem Vorformling 2 von Figur 3 gewalzt werden kann. Der Schaftabschnitt 6 aus der Figur 3 wurde zu einem Schaft 16 umgeformt, wobei die Länge des Schafts 16 deutlich größer ist als die Länge des nicht-gewalzten Schaftabschnitts 6. Durch das Querkeilwalzen kann eine sehr endnahe Kontur erreicht werden. Durch die Verwendung von Kernen oder Abstützelementen in dem optionalen Hohlraum kann eine weitere Längenerhöhung des Schaftes beim Walzen erreicht werden. Durch das Querkeilwalzen wird eine Endverdickung an einem Schaftende erzeugt. Die Keilform der Querkeile übt dabei beim Walzen eine Kraft in Axialrichtung aus, was weiter die Längenerhöhung des Ventilschaftes begünstigt. Durch den Hohlraum 10, der sich durch die Endverdickung erstreckt und in Axialrichtung zum Schaftende offen ist, kann Natrium als Kühlmittel leicht eingebracht werden. Die Endverdickung kann nun in einem weiteren Querkeilwalzschritt (nicht dargestellt) verschlossen werden, wobei bevorzugt gleich Halterillen mit in dem Ventilschaft eingewalzt werden können. Die Halterillen dienen dazu das Ventilschaftende mit 'Kegelstücken in Eingriff zu bringen. Damit kann ein innengekühltes Ventil nahezu vollständig durch umformen endmaßnah und endkonturnah gefertigt werden, wobei nur sehr wenig Materialabfall anfällt.

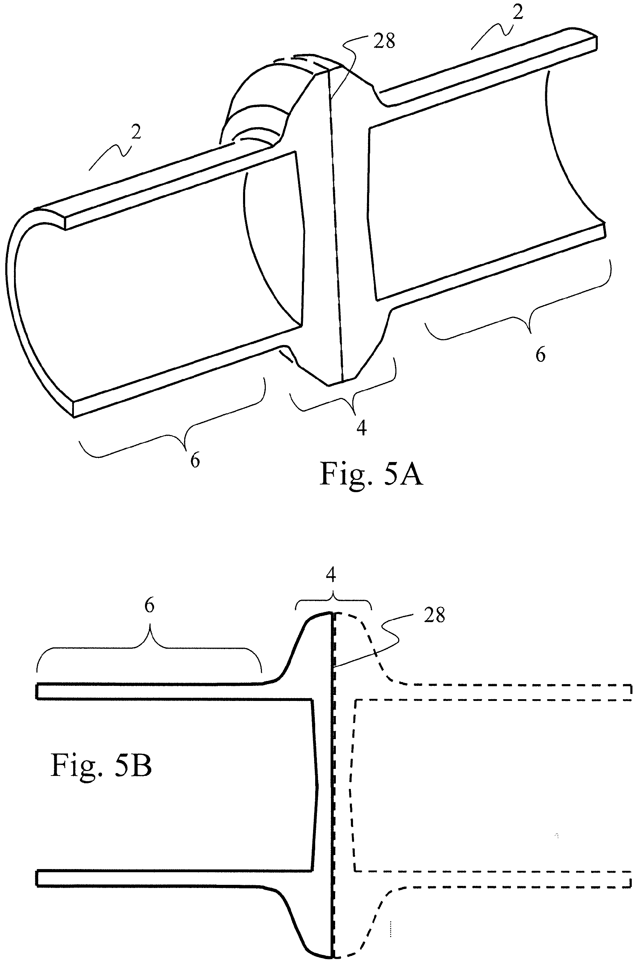

Figur 5A zeigt eine besondere Art eines Doppelventilvorformlings bzw. zweier zusammengelegter Ventilvorformlinge die gleichzeitig in einem erfindungsgemäßen Querkeilwalzvorgang zu einem erfindungsgemäßen Doppelventilrohling 20 bzw. zwei erfindungsgemäßen Ventilrohlingen gewalzt werden können. Querkeilwalzen bewährt sich insbesondere bei rotationssymmetrischen Bauteilen die zusätzlich noch eine Spiegelsymmetrie gegenüber einer Ebene aufweisen, die senkrecht zu einer Axialrichtung des Bauteils verläuft. Die Symmetrieebene ist durch die gestrichelte Linie 28 angedeutet die ebenfalls eine Trennlinie darstellt, an der die beiden gewalzten Ventilrohlinge getrennt werden können. Die Kräfte, die durch die Keile erzeugt werden können optimal in ein symmetrisches Werkstück eingebracht werden. Bei spiegelsymmetrischen Werkstücken, besteht keine Gefahr, dass sich das Werkstück beim Walzen in Richtung der Walzenachsen verschiebt, was ein Walzergebnis beeinträchtigen könnte. Der Doppelventilvorformling 20 wird durch Querkeilwalzen umgeformt und dann werden die beiden an den Ventiltellern zusammenhängenden Ventilrohlinge beispielsweise durch Abstechen auf einer Drehbank voneinander getrennt. Der Doppelventilvorformling 20 wie auch zwei zusammengelegte Ventilvorformlinge 2 ermöglichen es symmetrische Querkeilwalzen 40 oder symmetrische Querkeilwalzelemente 46 zu verwenden, was eine bedeutende Prozesstechnische Vereinfachung darstellt. Außerdem ermöglicht es der Doppelventilvorformling 20 auch gleichzeitig ein Einlass- und ein Auslassventil durch Querkeilwalzen zu erzeugen. Die Abmessungen von Einlass- und Auslassventilen unterscheiden sich zwar geringfügig, sie ermöglichen jedoch ein nahezu symmetrisches Querkeilwalzen. Ein weiterer Vorteil besteht dabei darin, dass die meisten Motoren eine gleiche Anzahl von Einlass- und Auslassventilen aufweisen, wodurch die Rüstzeiten zur Umrüstung von einer Einlass- zur Auslassventilproduktion durch das vorliegende Verfahren wegfallen kann.

In Figur 5A fällt auf, dass der Durchmesser des Schaftabschnitts 6 und des sich darin befindlichen Hohlraums im Vergleich zu dem Durchmesser des Ventilkopfabschnitts sehr groß sind.

In Figur 5B ist der Ventilvorformling 2 noch einmal in einer Schnittansicht dargestellt. Der Hohlraum erstreckt sich erfindugnsgemäß bis dicht an die spätere Ventiltellerfläche. Auch in Figur 5B zeigt das Bezugszeichen 28 eine Trennlinie, an der zwei Ventilvorformlinge zusammengelegt sein können, bzw. an der ein Doppelventilvorformling nach dem Querkeilwalzen zu zwei Ventilrohlingen getrennt werden kann.

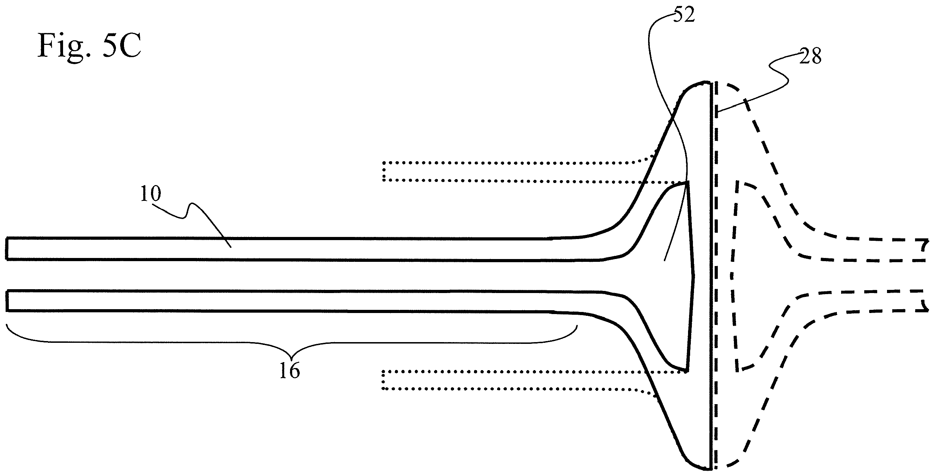

In Figur 5C ist der Ventilvorformling 2 von Figur 5B noch in gepunkteten Linien dargestellt, um die Verformung besser zu veranschaulichen. Der Durchmesser des Schaftabschnitts wurde erheblich verringert, und die Länge des Schaftabschnitts bedeutend erhöht. Da der Schaftabschnitt direkt am Ventilkopf nicht so stark durch Walzen im Durchmesser verringert ist, liegt der Hohlraum erfindungsgemäß noch nahezu mit seinem ursprünglichen Durchmesser vor. Somit ist gezeigt, dass sich auch Hohlkopfventile ohne weiteres durch Querkeilwalzen herstellen lassen. Die gestrichelte Linie deutet auch hier an, dass zwei Ventilvorformlinge gleichzeitig durch Querkeilwalzen hergestellt werden können. Es ist jedoch ebenfalls möglich einen Doppelventilvorformling zu verwenden um gleichzeitig zwei Hohlkopfventile bzw. Hohlkopfventilrohlinge herzustellen, die nach dem Querkeilwalzen entlang der Trennlinie 28 voneinander getrennt werden können.

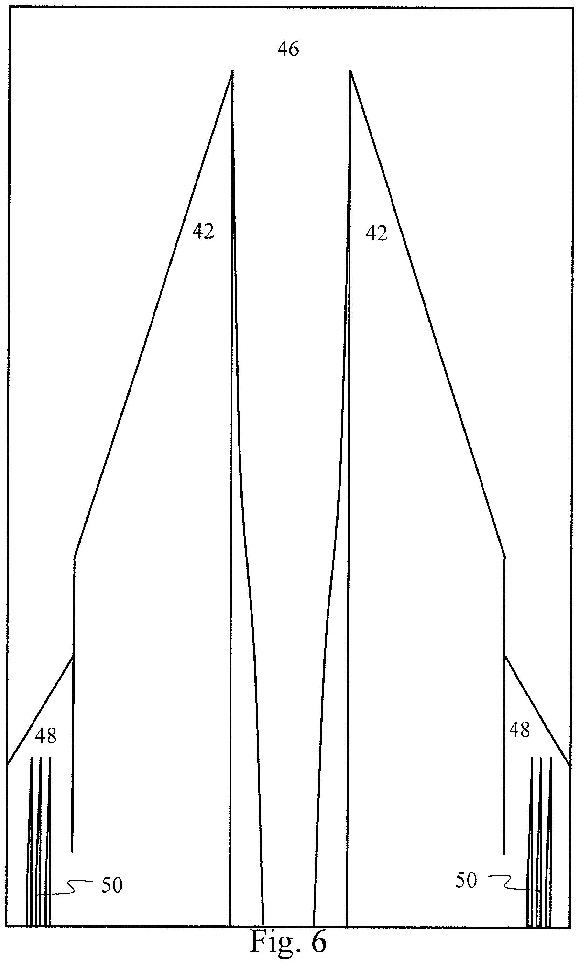

Figur 6 zeigt eine Aufsicht auf ein Querwalzelement 46, mit dem sich der Doppelventilvorformling 20 von Figur 5 zu zwei erfindungsgemäßen Ventilrohlingen bzw. einem erfindungsgemäßen Doppelventilrohling umformen lässt. Der Doppelventilvorformling 20 wird dabei von oben nach unten über die Oberfläche gerollt. Zuerst trifft dieser auf zwei erste Keile 42, die die Schaftabschnitte zu jeweiligen Schäften auswalzen. In einem Übergangsbereich bei dem die Ventilteller geformt werden kann Natrium in einen Hohlraum in den Ventilschäften eingebracht werden. Weiter unten ist der Keil zu einer Keilstufe 48 weiter geführt, um eine Schaftendverdickung auf einen Schaftdurchmesser zu walzen. Weiterhin sind auf jeder Seite drei zusätzliche Rillenkeile 50 angeordnet, die Halterillen in das Schaftende einwalzen sollen. Durch die Halterillen kann zusätzlich sichergestellt werden, dass der Hohlraum am Schaftende durch die zusammengepresste Schaftendverdickung verschlossen wird, wodurch das eingebrachte Natrium luftdicht in dem Hohlraum eingeschlossen wird.

### BEZUGSZEICHENLISTE

- 2: Vorformling, Venitlvorformling
- 4: Tellerabschnitt
- 6: Schaftabschnitt
- 8: Hohlraum
- 10: Ventilrohling
- 16: Schaft
- 20: Doppelventilvorformling
- 24: Schaftendverdickung
- 28: gestrichelte Linie / Trennlinie
- 40: Querkeilwalzen
- 42: Querkeile
- 44: Werkstück
- 46: Querkeilwalzelemente
- 48: Keilstufe
- 50: Rillenkeile
- 52: Hohl-Ventilkopf bzw. Ventil-Hohlkopf

## Patentansprüche

1. Verfahren zum Herstellen von Tellerventilen, umfassend
Querkeilwalzen eines Vorformlings (2) mit mindestens einem Tellerabschnitt (4) und einem Schaftabschnitt zu einem Ventilrohling (10), wobei ein Durchmesser des Schaftabschnitts (6) verringert wird, **dadurch gekennzeichnet, dass** der oder die Schaftabschnitte des
Vorformlings (2) einen in Axialrichtung zu einem Schaftende offenen Hohlraum umfasst bzw. umfassen, und wobei während des Querkeilwalzens jeweils mindestens ein Kern in jedem der Hohlräume angeordnet ist, der während des Querkeilwalzens verhindert, dass der Hohlraum zusammengedrückt wird und dafür sorgt, dass sich die Länge des Schaftabschnitts beim Querkeilwalzen erhöht,
wobei der Hohlraum vor dem Querkeilwalzen sich bis in den Tellerabschnitt und bis dicht an die spätere Ventiltellerfläche erstreckt, und wobei der Hohlraum vor dem Querkeilwalzen einen größeren Durchmesser aufweist als der spätere Schaftdurchmesser nach dem Querkeilwalzen, sodass nach dem Querkeilwalzen ein Tellerventil mit einem hohlen Ventilkopf (52) vorliegt.

2. Verfahren zum Herstellen von Tellerventilen gemäß Anspruch 1, wobei der Vorformling (2) zwei Tellerabschnitte (4) und zwei Schaftabschnitte umfasst, wobei die zwei Tellerabschnitte (4) miteinander verbunden sind, und wobei die Tellerabschnitte (4) nach einem Querkeilwalzen bevorzugt nach einer spanenden Bearbeitung einer Walzfläche voneinander getrennt werden.

3. Verfahren zum Herstellen von Tellerventilen gemäß einem der Ansprüche 1 oder 2, weiter umfassend Einwalzen von Eingriffsstrukturen an emem Schaftende des Schaftabschnitts, um mit Keilstücken in Eingriff zu stehen.

4. verfahren zum Herstellen von Tellerventilen gemäß emem der Ansprüche 1 bis 3, weiter umfassend Abstützen des Vorformlings (2) während des Querkeilwalzens, parallel oder tangential zu einer Walzbewegung von Querkeilwalzeiementen.

5. verfahren zum Herstellen von Tellerventilen gemaß emem der Anspruche 1 bis 4, umfassend zwei aufeinanderfolgende Querkeilwalzschritte, wobei bevorzugt zwei verschiedene Kerne verwendet werden.

6. Verfahren zum Herstellen von Tellerventilen gemäß einem der Ansprüche 1 bis 5, weiter umfassend spanendes Endbearbeiten des Tellerventilrohlings (10) zu einem Tellerventil.

7. Verfahren zum Herstellen von Tellerventilen gemäß einem der Ansprüche 1 bis 6, weiter umfassend Beschichten der Tellerventilrohlinge (10) oder Tellerventile.

8. Verfahren zum Herstellen von Tellerventilen gemäß einem der Ansprüche 1 bis 7, weiter umfassend Füllen des Hohlraums mit Natrium und verschließen des Hohlraums.

## Claims

1. A method for manufacturing disk valves, comprising
cross wedge rolling of a preform (2) having at least one disk section (4) and a shaft section to a valve blank (10), wherein a diameter of the shaft section (6) is reduced,
**characterized in that**
the shaft section(s) of the preform (2) comprise(s) a cavity that is open in axial direction towards one shaft end, and wherein at least one core is arranged in each of the cavities during cross wedge rolling, respectively, the core preventing the cavity from being compressed during the cross wedge rolling and ensuring that the length of the shaft section is increased during cross wedge rolling,
wherein the cavity extends into the disk portion and tightly to the later valve disk surface before the cross wedge rolling and wherein the cavity has a larger diameter before the cross wedge rolling than the later shaft diameter after the cross wedge rolling, so that a disk valve with a hollow valve head (52) is provided after the cross wedge rolling.

2. The method for manufacturing disk valves according to claim 1, wherein the preform (2) comprises two disk sections (4) and two shaft sections, wherein the two disk sections (4) are joined to one another and wherein the disk sections (4) are separated from one another after a cross wedge rolling, preferably after a machining of a rolling surface.

3. The method for manufacturing disk valves according to any one of claims 1 to 2, further comprising rolling-in engaging structures at one shaft end of the shaft section in order to engage with wedge parts.

4. The method for manufacturing disk valves according to any one of claims 1 to 3, further comprising supporting the preform (2) during cross wedge rolling, in parallel or tangential to a rolling movement of cross wedge rolling elements.

5. The method for manufacturing disk valves according to any one of claims 1 to 4, comprising two successive cross wedge rolling steps, wherein two different cores are preferably used.

6. The method for manufacturing disk valves according to any one of claims 1 to 5, further comprising final machining of the disk valve blank (10) to a disk valve.

7. The method for manufacturing disk valves according to any one of claims 1 to 6, further comprising coating of the disk valve blanks (10) or disk valves.

8. The method for manufacturing disk valves according to any one of claims 1 to 7, further comprising filling the cavity with sodium and closing the cavity.

## Revendications

1. Procédé de fabrication de soupapes en champignon, comprenant
le fait d'opérer un roulage en coin transversal d'une préforme (2) ayant au moins une partie de plateau (4) et une partie de tige pour former une ébauche de soupape (10), un diamètre de la partie de tige (6) étant réduit, **caractérisé en ce que** la ou les parties de tige de la préforme (2) comprend ou comprennent une cavité ouverte dans la direction axiale vers une extrémité de la tige, et dans lequel au moins un noyau est placé dans chacune desdites cavités pendant ledit roulage en coin transversal, ledit noyau empêchant ladite cavité d'être comprimée pendant ledit roulage en coin transversal et provoquant l'augmentation de la longueur de ladite partie de tige pendant ledit roulage en coin transversal,
la cavité, avant le roulage en coin transversal, s'étendant dans la partie de plateau et à proximité de la surface ultérieure du plateau de soupape, et la cavité, avant le roulage en coin transversal, ayant un diamètre plus grand que le diamètre ultérieur de la tige après le roulage en coin transversal, de sorte qu'après le roulage en coin transversal, il est obtenu une soupape à champignon ayant une tête de soupape creuse (52).

2. Procédé de fabrication de soupapes en champignon selon la revendication 1, dans lequel la préforme (2) comprend deux parties de plateau (4) et deux parties de tige, les deux parties de plateau (4) étant reliées l'une à l'autre, et les parties de plateau (4) étant séparées l'une de l'autre après un roulage en coin transversal, de préférence après un usinage d'une surface de roulage.

3. Procédé de fabrication des soupapes en champignon selon l'une des revendications 1 ou 2, comprenant en outre le fait d'opérer un roulage de structures d'engagement au niveau de l'extrémité de tige de la partie de tige de façon qu'elles soient en engagement avec des pièces de calage.

4. Procédé de fabrication de soupapes en champignon selon l'une quelconque des revendications 1 à 3, comprenant en outre le fait de supporter la préforme (2) pendant le roulage en coins transversal, parallèlement ou tangentiellement à un mouvement de roulage d'éléments de roulage en coin transversal.

5. Procédé de fabrication de soupapes en champignon selon l'une quelconque des revendications 1 à 4, comprenant deux étapes successives de roulage en coin transversal, utilisant de préférence deux noyaux différents.

6. Procédé de fabrication de soupapes en champignon selon l'une quelconque des revendications 1 à 5, comprenant en outre le fait d'opérer une finition par usinage de l'ébauche de soupape à champignon (10) pour former une soupape à champignon.

7. Procédé de fabrication de soupapes en champignon selon l'une quelconque des revendications 1 à 6, comprenant en outre le fait de revêtir l'ébauche de soupape à champignon (10) ou les soupapes en champignon.

8. Procédé de fabrication de soupapes en champignon selon l'une quelconque des revendications 1 à 7, comprenant en outre le fait de remplir la cavité avec du sodium et de fermer la cavité.
